# EUROPEAN PATENT SPECIFICATION

(11) **EP 3 616 877 B1**
(45) Date of publication and mention of the grant of the patent: **29.09.2021**
(21) Application number: 19187665.5
(22) Date of filing: 22.07.2019
(51) Int. Cl.: B29C 45/18

(54) **VALVE**
VENTIL
VANNE

(30) Priority: 28.08.2018 TW 107129970; 08.09.2018 TW 107131644
(43) Date of publication of application: 04.03.2020
(73) Proprietor: Otrajet Inc., Taichung City 408 (TW)
(72) Inventor: Chen, Ching-Hao, 408 Taichung City (TW)
(74) Representative: Lang, Christian

(56) References cited:
- EP-A1- 1 052 078
- EP-A2- 0 911 137
- JP-A- 2000 127 194
- US-A1- 2004 161 490
- US-A1- 2012 276 235

## Description

### BACKGROUND OF THE INVENTION

### 1. Field of the Invention

The invention relates to the technique of fluid supply, and more particularly to a valve applied in the technique of polymer molding and processing to provide control of opening and closing of a supply passageway for fluid such as supercritical fluid, color paste, or any other additive to flow therein.

### 2. Description of the Related Art

As described in US patent NO. 6659757, a problem exists in a conventional valve that the gap between the valve stem and the valve hole tends to cause deviation over time and consequently wears between various parts, which leads to failure of the valve itself. In order to overcome this problem, a design of multiple gaskets was disclosed to ensure the coaxial correspondence between the valve stem and the valve hole, so as to prevent one part from wearing with respect to other parts due to its deviation in position. Although such a technique can achieve its object, this technical solution of multiple gaskets does not provide a perfect design.

Patent application publication EP 0911137 A1 discloses a valve having the features of the preamble of claim 1. Further valve assemblies are known frompatent application publications US 2012/0276235 A1, EP 1052078 A1 and US 2004/0161490 A1.

### SUMMARY OF THE INVENTION

In view of this, it is a main object of the invention to provide a valve that can control closing and opening of a fluid supply passageway.

Therefore, to achieve this object, the invention provides a valve having the features of claim 1. Further embodiments are subject-matter of the dependent claims.

The valve according to the invention is disposed in a fluid supply path to control opening or closing of the supply path, configured to comprise, as components of the supply path, an inflow channel, a second channel, a first channel, and an outflow channel that are in communication with each other in sequence, in such a manner that fluid from a supply source entering the inflow channel passes through the second channel and the first channel in sequence and then flows out through the outflow channel. The valve further comprises a first valve piece and a second valve piece disposed movably in the first channel and the second channel respectively. Blocking or unblocking of the communication between the first channel and the outflow channel is controlled by movement of the first valve piece in the first channel, while blocking or unblocking of the communication between the inflow channel and the first channel via the second channel is controlled by movement of the second valve in the second channel. In this way, the valve enables opening or closing of the supply path through dual control by the first valve piece and the second valve piece.

The valve further comprises a seat in which the inflow channel, the first channel, the second channel, and the outflow channel are disposed, and the first valve piece and the second valve piece are disposed slidably.

Further, the first valve piece further comprises a first valve stem that is disposed slidably in the first channel and can move axially back and forth along its stem axis between a first closed position and a first opened position. The second valve piece further comprises a second valve stem that is disposed slidably in the second channel and can move axially back and forth along its stem axis between a second closed position and a second opened position. In this way, when the first valve stem is in the first opened position and the second valve stem is in the second opened position, the portion of the supply path consisting of the inflow channel, the second channel, the first channel, and the outflow channel is unblocked, whereas when the first valve stem is in the first closed position and the second valve stem is in the second closed position, this portion of the supply path is blocked to stop flowing of the fluid.

The first valve stem is segmented in sequence along its stem axis into a main shaft segment positioned in the first channel, an extended segment extended and positioned in the outflow channel, and an annular tapered face between the main shaft segment and the extended segment. The outflow channel has a tapered-segment inner wall face opposite to that tapered face and of the same slope as it. In this way, the first valve stem, when in the first closed position, causes the tapered face to be opposite to and in close contact with the tapered-segment inner wall face, so as to block the communication between the outflow channel and the first channel.

The second channel has a main body segment through which the second valve stem passes and disposed slidably and which is in communication with the inflow channel, and a connection segment of an inner diameter smaller than that of the main body segment for connecting the main body segment to the first channel. The second valve stem has cone-ended segment in a tapered shape on its end, and the end of the cone-ended segment extends from the main body segment into the connection segment. When the second valve stem is in the second closed position, a tapered bezel at the circumferential side of the cone-ended segment is pressed against the opening in the connection segment connected to the main body segment to block the communication between the main body segment and the connection segment.

### BRIEF DESCRIPTION OF THE DRAWINGS

FIG. 1 is a three-dimensional view of a preferred embodiment of the invention;
FIG. 2 is an exploded view of a first preferred embodiment of the invention;
FIG. 3 is a three-dimensional view of the first preferred embodiment of the invention applied to a polymer injection machine;
FIG. 4 is a sectional view of the first preferred embodiment of the invention taken along the sectional line a-a in FIG. 3, in which the first valve stem and the second valve stem are respectively in a closed position;
FIG. 4 (A) is a partial enlarged view showing the area A in FIG. 4;
FIG. 4 (B) is a partial enlarged view showing the area B in FIG. 4;
FIG. 5 is a sectional view of the first preferred embodiment of the invention taken along the sectional line a-a in FIG. 3, in which the first valve stem and the second valve stem are respectively in an opened position;
FIG. 5 (A) is a partial enlarged view showing the area A in FIG. 5;
FIG. 5 (B) is a partial enlarged view showing the area B in FIG. 5;
FIG. 6 is a three-dimensional view of a second preferred embodiment of the invention;
FIG. 7 is a sectional view of the second preferred embodiment of the invention taken along the sectional line 7-7 in FIG. 6;
FIG. 8 is a three-dimensional bottom view of the second preferred embodiment of the invention; and
FIG. 9 is a three-dimensional bottom view showing a partial section of the second preferred embodiment of the invention.

### DETAILED DESCRIPTION OF THE PREFERRED EMBODIMENTS

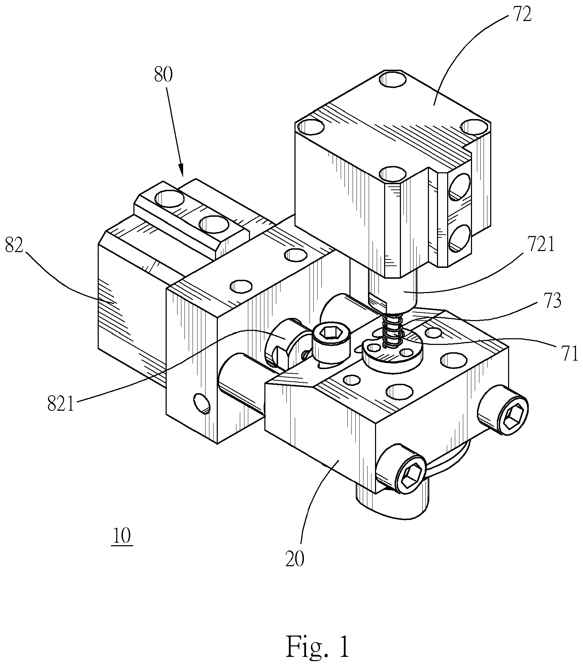

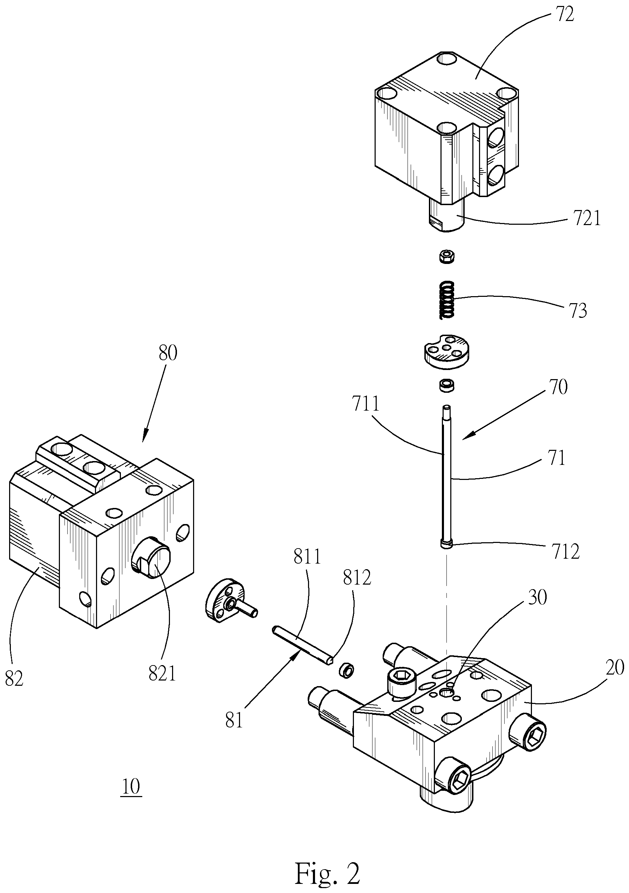

First, with reference to FIGS. 1 and 2, a valve (10) according to a preferred embodiment of the invention comprises essentially a seat (20), a first channel (30), a second channel (40), an inflow channel (50), an outflow channel (60), a first valve piece (70), and a second valve piece (80).

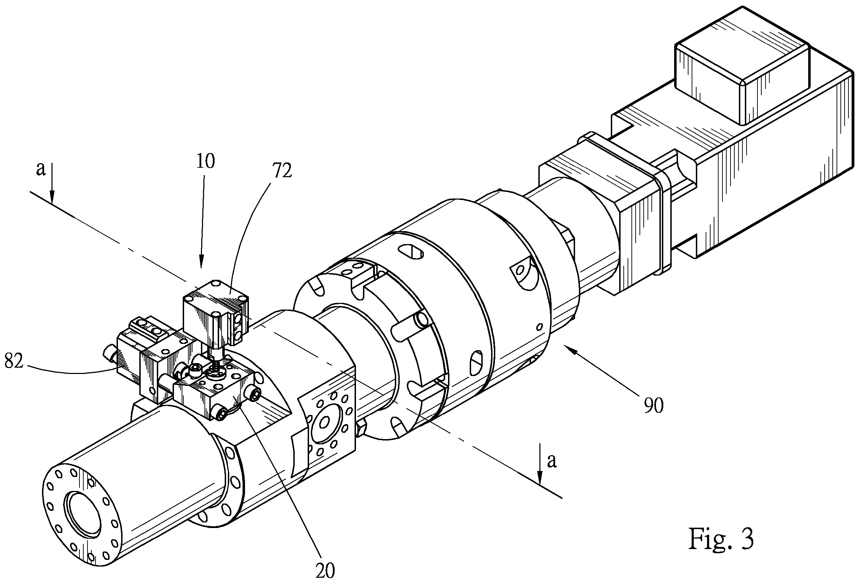

The seat (20) is a block having a shape and configuration that can be assembled and joined to other elements and a strength that can withstand the high pressure of the fluid. The seat (20) is joined to an extrusion barrel or a mixing barrel of a polymer injection machine (90) shown in FIG. 3 and serves as part of a supply path for external fluid to be supplied into the extrusion barrel or the mixing barrel and mixed with the polymer material, and also as a base on which other constituent elements of the valve (10) are provided. In the technique of polymer molding and processing, the so-called external fluid is, for example, super-critical fluid, color Masterbatch, color paste, or any other additive in the state of fluid.

The first channel (30) and the outflow channel (60) are straight holes passing through the seat (20) in coaxial communication with each other. Specifically, the outflow channel (60) has an outflow segment (61) extending inwardly from the end face of an underside of the seat (20) to a suitable depth. A tapered segment (62) in the shape of a cone-shaped hole is positioned inside the seat (20) and connects the outflow segment (61) to the first channel (30). The inner diameter of the outflow segment (61) is larger than that of the first channel (30), so that the inner wall face (621) of the tapered segment (62) faces the outflow segment (61).

The second channel (40) is a straight hole that extends inwardly from the left end face of the seat (20) and is in communication with and perpendicular to a middle portion of the first channel (30). Further, the second channel (40) is segmented in sequence along the hole axis into a main body segment (41) in communication with the outside on the left end face of the seat (20), a connection segment (42) of an inner diameter smaller than that of the main body segment (41) and connecting the main body segment (41) to the first channel (30), and a shoulder face (43) between the main body segment (41) and the connection segment (42).

The inflow channel (50) extends from the top end of the seat (20) downwardly and obliquely to a location on the main body segment (41) close to the shoulder face (43) .

The first valve piece (70) has a first valve stem (71) in the shape of a straight bar that passes coaxially through the first channel (30) and the outflow channel (60). Its top end extends above the seat (20) and its bottom end is positioned in the outflow channel (60). A first hydraulic cylinder (72) has an output shaft (721) pressed against the top end of the first valve stem (71). A compression spring (73) is sleeved over the portion of the first valve stem (71) that extends out of the seat (20), and provides an elastic force for the first valve stem (71) to move upwardly.

Further, the first valve stem (71) is segmented along its stem axis into a main shaft segment (711) disposed slidably in the first channel (30), an extended segment (712) extending into the outflow channel (60), and an annular tapered face (713) between the main shaft segment (711) and the extended segment (712). The tapered face (713) is opposite to the inner wall face (621) of the tapered segment (62) and has the same tapering slope as it. The main shaft segment (711) has an outer diameter smaller than the inner diameter of the first channel (30), and the extended segment (712) has an outer diameter smaller than the inner diameter of the outflow segment (61) .

The second valve piece (80) has a second valve stem (81) in the shape of a straight bar that passes slidably and coaxially through the main body segment (41) of the second channel (40) with its left end extending out of the left end face of the seat (20). A second hydraulic cylinder (82) has an output shaft (821) pressed against the left end of the second valve stem (81).

Still further, the second valve stem (81) is segmented in sequence along its stem axis into a shaft body segment (811) disposed slidably in the second channel (40) and a cone-ended segment (812) is a tapered shape between the shaft body segment (811) and the connection segment (42) .

In addition, the specific configuration and arrangement or coupling with other elements and the like of the first hydraulic cylinder (72) and the second hydraulic cylinder (82) are well known in the art. They are illustrated merely as the power source for actuation of the valve in the present embodiment. Therefore, although some parts are not fully depicted in the figures, they will not affect implementation of the invention by those of ordinary skills in the art.

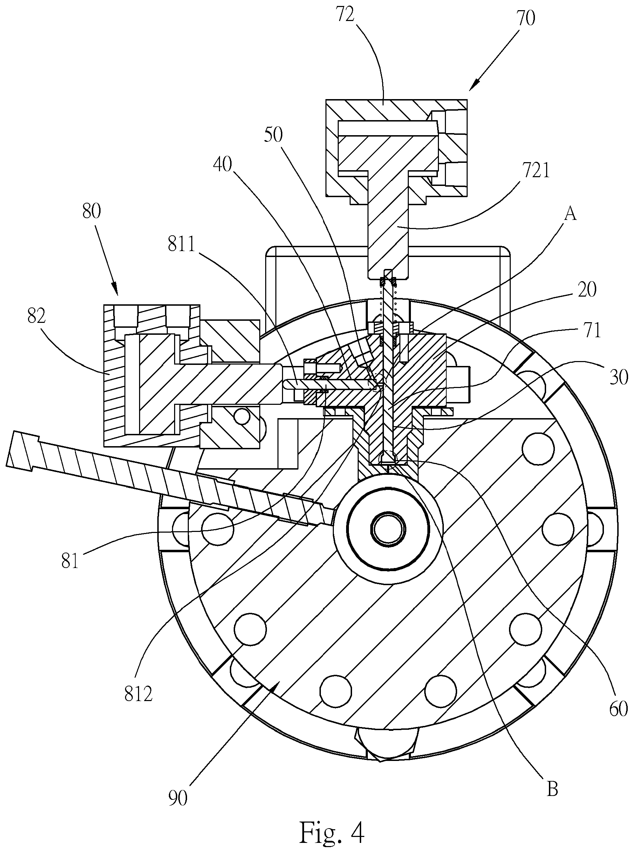

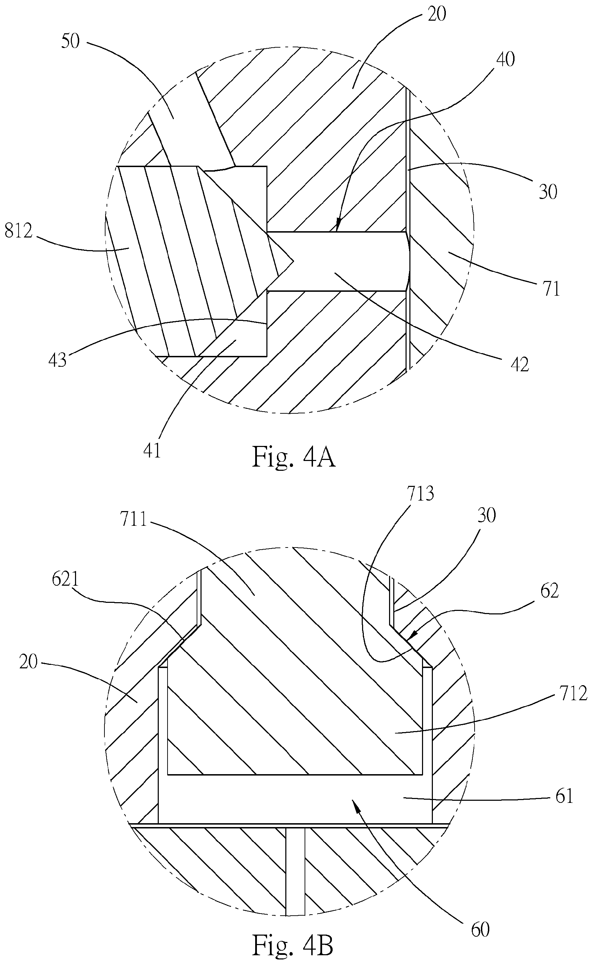

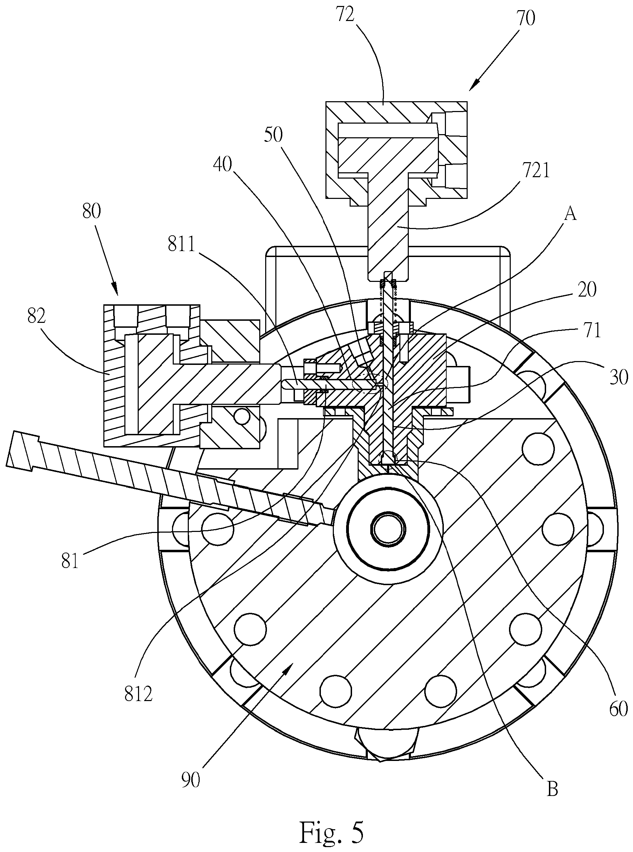

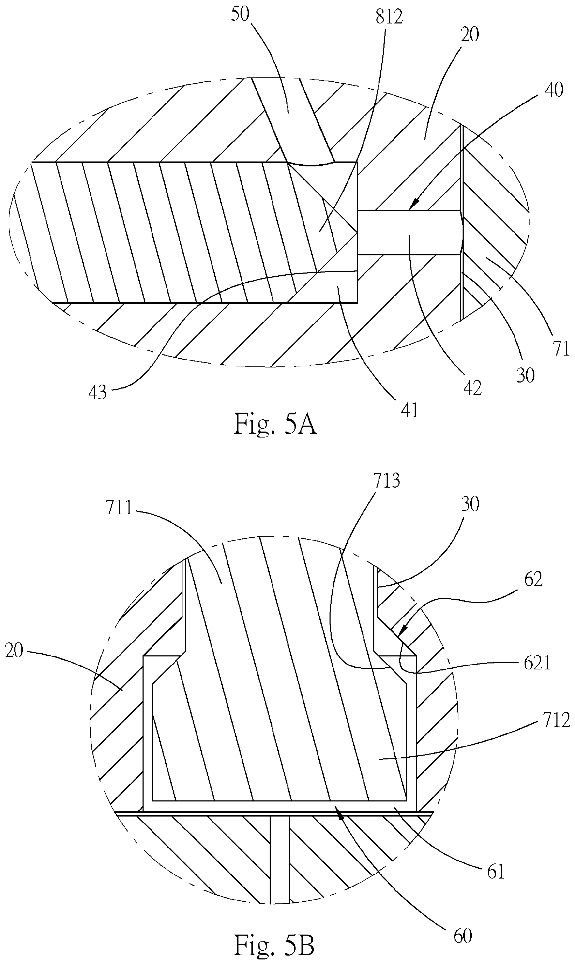

With the configuration of the members described above, the first valve stem (71) can be moved back and forth axially in the first channel (30) and the outflow channel (60) along its stem axis between a first closed position and a first opened position. The second valve stem (81) can be moved back and forth axially in the second channel (40) along its stem axis between a second closed position and a second opened position. Generally, when the first valve stem (71) is in the first closed position and the second valve stem (81) is in the second closed position, the communication between the inflow channel (50) and the first channel (30) as well as the communication between the first channel (30) and the outflow segment (61) are blocked as shown in FIG. 4. On the contrary, when the first valve stem (71) is in the first opened position and the second valve stem (81) is in the second opened position, the whole passageway, from the inflow channel (50), through the second channel (40) and the first channel (30) in sequence, to the outflow channel (60), is unblocked as shown in FIG. 5. In this way, the valve (10) can control flow of the fluid, so as to control the amount of fluid entering the extrusion barrel or the mixing barrel of the polymer injection machine (90) to be mixed with the polymer material.

With reference to FIGS. 5, 5(A), and 5(B), as for the axial movement of the first valve stem (71), the elastic force of the compression spring (73) maintains the first valve stem (71) elastically in the first closed position. As shown in FIG. 4, when the first valve stem (71) is in the first closed position, the tapered face (713) is in close contact with the inner wall face (621), thereby blocking the communication between the outflow segment (61) and the first channel (30). On the contrary, when power is supplied from the first hydraulic cylinder (72) to push the first valve stem (71) downward via the output shaft (721) so as to cause the first valve stem (71) to move axially to the first opened position as shown in FIG. 5, the tapered face (713) and the inner wall face (621) are separated from each other. Also, since the outer diameter of the main shaft segment (711) is smaller than that of the first channel (30) and the outer diameter of the extended segment (712) is smaller than that of the outflow segment (61), such a difference in size provides a gap therebetween for the fluid to flow therein.

Still further, with reference to FIGS. 4, 4(A), and 4(B), as for the axial movement of the second valve stem (81), an external force from the second hydraulic cylinder (82) pushes the second valve stem (81) to the right till the second closed position as shown in FIG. 4. At this point, the end of the cone-ended segment (812) extends from the main body segment (41) into the connection segment (42), with the tapered face at the circumferential side being pressed against the opening in the connection segment (42) connected to the main body segment (41), thereby blocking the communication between the main body segment (41) and the connection segment (42) . Meanwhile, a space (s) between the circumferential side of the cone-ended segment (812) and the inner wall face of the main body segment (41) remains in communication with the inflow channel (50), thereby allowing the space (s) to be filled with the fluid that is still in communication with an external fluid supply via the inflow channel (50) . In other words, in this space (s), high pressure of the fluid acts continuously on the circumferential side face of the cone-ended segment (812). Therefore, once the external force applied by the second hydraulic cylinder (82) is released, the pressure of the fluid in the space (s) pushes the second valve stem (81) to the left till the second opened position as shown in FIG. 5, thereby allowing the inflow channel (50) to be in communication indirectly with the first channel (30) via the second channel (40).

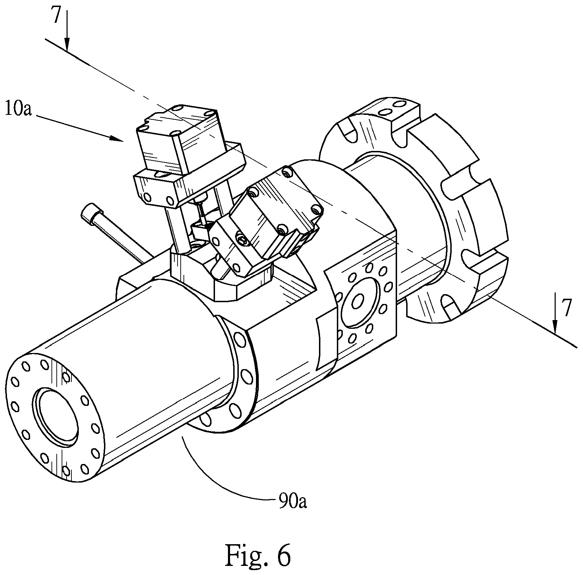

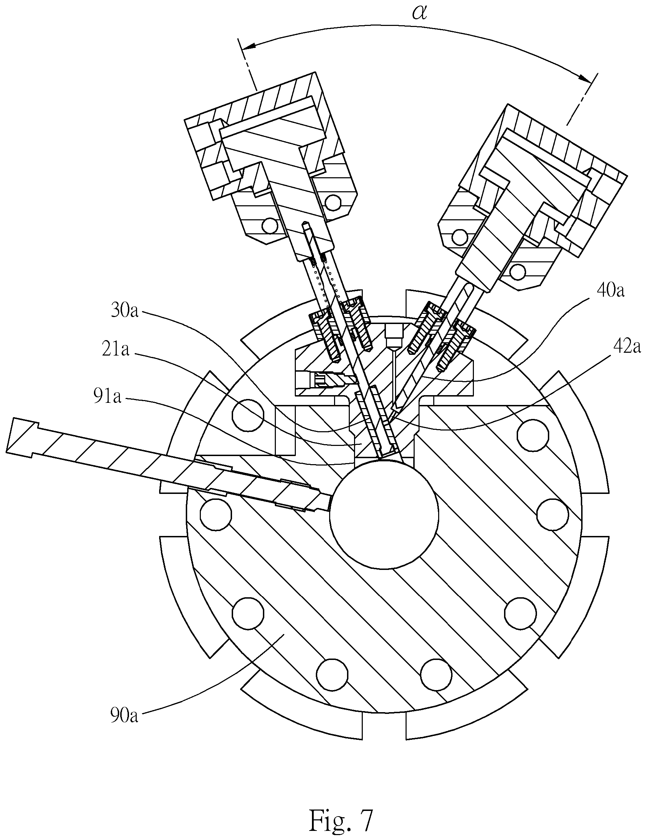

Further, with reference to FIGS. 6 and 7, the valve (10a) according to the second preferred embodiment of the invention has the same essential technical characteristics as the one disclosed in the first preferred embodiment described above, but has better efficacy than the first preferred embodiment in maintaining the temperature of the fluid.

Specifically, as disclosed in this embodiment, the second channel (40a) and the first channel (30a) are in communication with each other with an acute included angle (α) therebetween, so that the connection segment (42a) is positioned closer to the center of the extrusion barrel or the mixing barrel of the polymer injection machine (90a). In this way, heat generated during operation of the extrusion barrel or the mixing barrel of the polymer injection machine (90a) can be utilized to maintain the temperature of the fluid, thereby reducing temperature loss of the fluid.

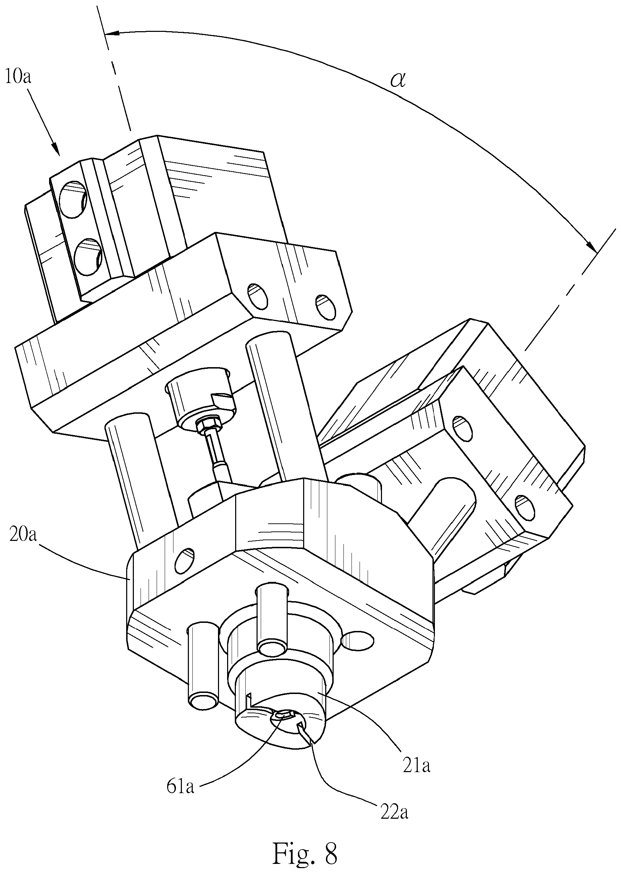

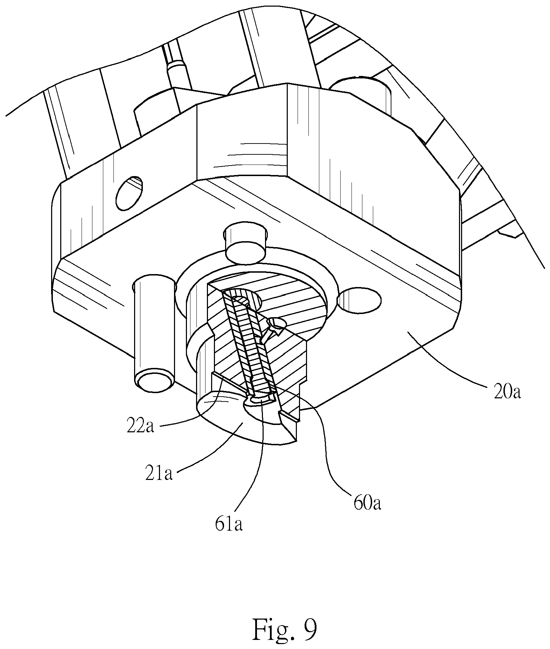

In order to further maintain the temperature of the fluid, and with reference to FIGS. 8 and 9, in this embodiment, an approximately V-shaped connection is made between the second channel (40a) and the first channel (30a) to allow the portions of the channels connected to be positioned inside an insertion pillar (21a) protruding from the bottom end of the seat (20a) . As such, once the insertion pillar (21a) of the seat (20a) is inserted into an insertion hole (91a) in the extrusion barrel or mixing barrel of the polymer injection machine (90a) and the seat (20a) is thus joined to the extrusion barrel or mixing barrel of the polymer injection machine (90a), the portions of the channels connected are covered by the extrusion barrel or mixing barrel of the polymer injection machine (90a), thereby avoiding temperature loss due to contact with the surroundings.

In addition, in this embodiment, the outflow segment (61a) of the outflow channel (60a) is further in communication with an undercut (22a) provided at the end of the insertion pillar (21a), so that the fluid flowing out via the outflow segment (61a) is dispersed via the undercut (22a) and then fed evenly into the extrusion barrel or mixing barrel of the polymer injection machine (90a) and mixed with the raw material.

## Claims

1. A valve (10) positioned in a fluid supply path to control opening and closing of the supply path, comprising:
a seat (20);
a first channel (30) disposed in the seat (20);
a second channel (40) disposed in the seat (20) and in communication with the first channel;
an inflow channel (50) disposed in the seat (20) and in communication with the second channel (40), and also in communication indirectly with the first channel (30) via the second channel (40);
an outflow channel (60) disposed in the seat (20) and in communication with the first channel (30, and also in communication indirectly with the inflow channel via the first channel (30) and the second channel (40);
a first valve piece (70) disposed movably in the first channel (30), wherein the first valve piece (70) can be moved between a first closed position and a first opened position, in which when the first valve piece (70) is in the first closed position, the communication between the first channel (30) and the outflow channel (60) is blocked, whereas when the first valve piece (70) is in the first opened position, the first channel (30) and the outflow channel (60) are put in communication with each other;
a second valve piece (80) disposed movably in the second channel (40), wherein the second valve piece (80) can be moved between a second closed position and a second opened position, in which when the second valve piece (80) is in the second closed position, the communication between the inflow channel (50) and the first channel (30) is blocked, whereas when the second valve piece (80) is in the second opened position, the first channel (30) and the inflow channel (50) are put in communication with each other **characterized in that**
the seat (20) is configured to be joined to an extrusion barrel or mixing barrel of a polymer injection machine (90) so as to form a part of a supply path for an external fluid to be supplied into the extrusion barrel or the mixing barrel.

2. The valve of claim 1, wherein the first valve piece (70) has a first valve stem (71) disposed slidably in the first channel (30) that can be moved axially back and forth along its stem axis between the first closed position and the first opened position.

3. The valve of claim 2, wherein the first valve stem (71) is segmented in sequence along its stem axis into a main shaft segment (711) positioned in the first channel (30), an extended segment (712) positioned in the outflow channel (60), and an annular tapered face (713) between the main shaft segment (711) and the extended segment (712) .

4. The valve of claim 3, wherein:
the outflow channel (60) has an outflow segment (61) of an inner diameter larger than the inner diameter of the first channel (30) and the outer diameter of the extended segment (712) and a tapered segment (62) connecting the outflow segment (61) to the first channel (30), the inner wall face (621) of the tapered segment (62) having the same tapering slope as the tapered face (713); and
when the first valve stem (71) is in the first closed position, the tapered face (713) is in close contact with the inner wall face (621) of the tapered segment (62) to block the tapered segment (62), whereas when the first valve stem (71) is in the first opened position, the tapered face (713) is separated from the inner wall face (621) of the tapered segment (62).

5. The valve of claim 4, wherein the first channel (30) and the outflow channel (60) pass through the seat in coaxial communication with each other.

6. The valve of claim 1, wherein the second channel (40) has a main body segment (41) and a connection segment (42) connecting the main body segment (41) to the first channel (30), the connection segment (42) having an inner diameter smaller than the inner diameter of the main body segment (41) so as to form an opening in communication with the main body segment (41).

7. The valve of claim 6, wherein the inflow channel (50) is connected to the main body segment (41) ataposition adjacent to the connection segment (42).

8. The valve of claim 7, wherein the second valve piece (80) has a second valve stem (81) disposed slidably in the main body segment (41) that can be moved axially back and forth along its stem axis between the second closed position and the second opened position.

9. The valve of claim 8, wherein:
the second valve stem (81) is segmented in sequence along its stem axis into a shaft body segment (811) positioned in the main body segment (41) and a cone-ended segment (812) in a tapered shape, the end of the cone-ended segment (812) capable of being extended into the connect ion segment (42);
when the second valve stem (81) is in the second closed position, the end of the cone-ended segment (812) is positioned in the connection segment (42), while the tapered bevel at the circumferential side of the cone-ended segment (812) is pressed against the opening in the connection segment (42), so as to block the communication between the connection segment (42) and the main body segment (41); and
when the second valve stem (81) is in the second opened position, the tapered bevel at the circumferential side of the cone-ended segment (812) is separated from the opening in the connection segment (42), so as to put the main body segment (41) and the connection segment in communication with each other.

10. The valve of claim. 9, wherein when the second valve stem (81) is in the second closed position, the space between the inner side wall face (621) of the main body segment (41) and the tapered bevel at the circumferential side of the cone-ended segment (812) is in communication with the inflow channel (50).

11. The valve of claim 1, wherein the first channel (30) and the second channel (40) are in communication with and perpendicular to each other.

12. The valve of claim 1, wherein the first channel (30) and the second channel (40) are in communication with each other and separated by an acute included angle.

## Patentansprüche

1. Ventil (10), das in einer Fluid-Versorgungsleitung positioniert ist, um Öffnung und Schließung der Versorgungsleitung zu steuern, umfassend:
einen Sitz (20),
einen ersten Kanal (30), der in dem Sitz (20) angeordnet ist,
einen zweiten Kanal (40), der in dem Sitz (20) angeordnet ist und mit dem ersten Kanal in Verbindung steht,
einen Zuflusskanal (50), der in dem Sitz (20) angeordnet ist und mit dem zweiten Kanal (40) in Verbindung steht und über den zweiten Kanal (40) auch in indirekter Verbindung mit dem ersten Kanal (30) steht,
einen Abflusskanal (60), der in dem Sitz (20) angeordnet ist und mit dem ersten Kanal (30) in Verbindung steht und auch über den ersten Kanal (30) und den zweiten Kanal (40) in indirekter Verbindung mit dem Zuflusskanal steht,
ein erstes Ventilstück (70), das beweglich in dem ersten Kanal (30) angeordnet ist, wobei das erste Ventilstück (70) zwischen einer ersten Schließposition und einer ersten Öffnungsposition bewegt werden kann, wobei, wenn das erste Ventilstück (70) in der ersten Schließposition ist, die Verbindung zwischen dem ersten Kanal (30) und dem Abflusskanal (60) blockiert ist, wohingegen, wenn das erste Ventilstück (70) in der ersten Öffnungsposition ist, der erste Kanal (30) und der Abflusskanal (60) miteinander in Verbindung sind,
ein zweites Ventilstück (80), das beweglich in dem zweiten Kanal (40) angeordnet ist, wobei das zweite Ventilstück (80) zwischen einer zweiten Schließposition und einer zweiten Öffnungposition bewegt werden kann, wobei, wenn sich das zweite Ventilstück (80) in der zweiten Schließposition befindet, die Verbindung zwischen dem Zuflusskanal (50) und dem ersten Kanal (30) blockiert ist, wohingegen, wenn sich das zweite Ventilstück (80) in der zweiten Öffnungsposition befindet, der erste Kanal (30) und der Zuflusskanal (50) in Verbindung miteinander sind,
**dadurch gekennzeichnet, dass**
der Sitz (20) so konfiguriert ist, dass er mit einem Extrusionszylinder oder einem Mischzylinder einer Polymerspritzmaschine (90) verbunden werden kann, um einen Teil eines Zuführungspfades für ein externes Fluid zu bilden, das in den Extrusionszylinder oder den Mischzylinder zugeführt werden soll.

2. Ventil nach Anspruch 1, bei welchem das erste Ventilstück (70) einen in dem ersten Kanal (30) verschiebbar angeordneten ersten Ventilschaft (71) aufweist, der entlang seiner Schaftachse zwischen der ersten Schließposition und der ersten Öffnungsposition axial hin und her bewegbar ist.

3. Ventil nach Anspruch 2, bei welchem der erste Ventilschaft (71) entlang seiner Schaftachse nacheinander segmentiert ist in ein Hauptschaftsegment (711), das in dem ersten Kanal (30) positioniert ist, ein in dem Abflusskanal (60) positioniertes erweitertes Segment (712) und eine ringförmige Konusfläche (713) zwischen dem Hauptschaftsegment (711) und dem erweiterten Segment (712).

4. Ventil nach Anspruch 3, bei welchem
der Abflusskanal (60) ein Abflusssegment (61) mit einem Innendurchmesser, der größer ist als der Innendurchmesser des ersten Kanals (30) und der Außendurchmesser des erweiterten Segments (712), und ein Konussegment (62) aufweist, das das Abflusssegment (61) mit dem ersten Kanal (30) verbindet, wobei die Innenwandfläche (621) des Konussegments (62) die gleiche Neigung aufweist wie die Konusfläche (713), und wobei,
wenn der erste Ventilschaft (71) in der ersten Schließposition ist, die Konusfläche (713) dann in engem Kontakt mit der Innenwandfläche (621) des Konussegments (62) steht, um das Konussegment (62) zu blockieren, wohingegen, wenn der erste Ventilschaft (71) in der ersten Öffnungposition ist, die Konusfläche (713) von der Innenwandfläche (621) des Konussegments (62) getrennt ist.

5. Ventil nach Anspruch 4, bei welchem der erste Kanal (30) und der Abflusskanal (60) in koaxialer Verbindung zueinander durch den Sitz verlaufen.

6. Ventil nach Anspruch 1, bei welchem der zweite Kanal (40) ein Hauptkörpersegment (41) und ein Verbindungssegment (42) aufweist, welches das Hauptkörpersegment (41) mit dem ersten Kanal (30) verbindet, wobei das Verbindungssegment (42) einen Innendurchmesser aufweist, der kleiner ist als der Innendurchmesser des Hauptkörpersegments (41), um eine Öffnung zu bilden, die mit dem Hauptkörpersegment (41) in Verbindung steht.

7. Ventil nach Anspruch 6, bei welchem der Zuflusskanal (50) mit dem Hauptkörpersegment (41) an einer Stelle verbunden ist, die an das Verbindungssegment (42) angrenzt.

8. Ventil nach Anspruch 7, bei welchem das zweite Ventilstück (80) einen im Hauptkörpersegment (41) verschiebbar angeordneten zweiten Ventilschaft (81) aufweist, der entlang seiner Schaftachse zwischen der zweiten Schließposition und der zweiten Öffnungsposition axial hin- und herbewegt werden kann.

9. Ventil nach Anspruch 8, bei welchem
der zweite Ventilschaft (81) entlang seiner Schaftachse in ein im Hauptkörpersegment (41) positioniertes Schaftkörpersegment (811) und ein kegelförmiges Segment (812) unterteilt ist, wobei sich das Ende des kegelförmigen Segments (812) in das Verbindungselement (42) erstrecken kann, wobei,
wenn der zweite Ventilschaft (81) in der zweiten Öffnungsposition ist, das Ende des kegelförmigen Segments (812) dann im Verbindungssegment (42) positioniert ist, während die konische Abschrägung an der Umfangsseite des kegelförmigen Segments (812) gegen die Öffnung im Verbindungselement gedrückt wird, um die Verbindung zwischen dem Verbindungselement (42) und dem Hauptkörpersegment (41) zu blockieren, und wobei,
wenn der zweite Ventilschaft (81) in der zweiten Öffnungsposition ist, die konische Abschrägung an der Umfangsseite des kegelförmigen Segments (812) von der Öffnung in dem Verbindungssegment (42) getrennt ist, um das Hauptkörpersegment (41) und das Verbindungssegment miteinander in Verbindung zu bringen.

10. Ventil nach Anspruch 9, bei welchem, wenn der zweite Ventilschaft (81) in der zweiten Schließposition ist, der Raum zwischen der inneren Seitenwandfläche (621) des Hauptkörpersegments (41) und der konischen Abschrägung an der Umfangsseite des kegelförmigen Segments (812) in Verbindung mit dem Zuflusskanal (50) steht.

11. Ventil nach Anspruch 1, bei welchem der erste Kanal (30) und der zweite Kanal (40) in Verbindung mit und senkrecht zueinander stehen.

12. Ventil nach Anspruch 1, bei welchem der erste Kanal (30) und der zweite Kanal (40) miteinander in Verbindung stehen und durch einen spitzen eingeschlossenen Winkel getrennt sind.

## Revendications

1. Vanne (10) positionnée dans un trajet d'alimentation en fluide pour commander une ouverture et une fermeture du trajet d'alimentation, comprenant:
un siège (20);
un premier canal (30) disposé dans le siège (20);
un second canal (40) disposé dans le siège (20) et en communication avec le premier canal;
un canal d'entrée (50) disposé dans le siège (20) et en communication avec le second canal (40), et également en communication indirecte avec le premier canal (30) via le second canal (40);
un canal de sortie (60) disposé dans le siège (20) et en communication avec le premier canal (30), et également en communication indirecte avec le canal d'entrée via le premier canal (30) et le second canal (40);
une première pièce de vanne (70) disposée de manière mobile dans le premier canal (30), dans laquelle la première pièce de vanne (70) peut être déplacée entre une première position fermée et une première position ouverte, dans laquelle lorsque la première pièce de vanne (70) est dans la première position fermée, la communication entre le premier canal (30) et le canal de sortie (60) est bloquée, alors que lorsque la première pièce de vanne (70) est dans la première position ouverte, le premier canal (30) et le canal de sortie (60) sont mis en communication l'un avec l'autre;
une seconde pièce de vanne (80) disposée de manière mobile dans le second canal (40), dans laquelle la seconde pièce de vanne (80) peut être déplacée entre une seconde position fermée et une seconde position ouverte, dans laquelle lorsque la seconde pièce de vanne (80) est dans la seconde position fermée, la communication entre le canal d'entrée (50) et le premier canal (30) est bloquée, alors que lorsque la seconde pièce de vanne (80) est dans la seconde position ouverte, le premier canal (30) et le canal d'entrée (50) sont mis en communication l'un avec l'autre,
**caractérisée en ce que**
le siège (20) est configuré pour être assemblé à un barillet d'extrusion ou à un barillet de mélange d'une machine d'injection de polymère (90) de manière à former une partie d'un trajet d'alimentation pour un fluide externe à alimenter dans le barillet d'extrusion ou le barillet de mélange.

2. Vanne selon la revendication 1, dans laquelle la première pièce de vanne (70) présente une première tige de vanne (71) disposée de manière coulissante dans le premier canal (30) qui peut être déplacée axialement en va-et-vient le long de son axe de tige entre la première position fermée et la première position ouverte.

3. Vanne selon la revendication 2, dans laquelle la première tige de vanne (71) est segmentée en séquence le long de son axe de tige en un segment d'arbre principal (711) positionné dans le premier canal (30), un segment étendu (712) positionné dans le canal de sortie (60), et une face conique annulaire (713) entre le segment d'arbre principal (711) et le segment étendu (712).

4. Vanne selon la revendication 3, dans laquelle:
le canal de sortie (60) présente un segment de sortie (61) d'un diamètre intérieur plus grand que le diamètre intérieur du premier canal (30) et que le diamètre extérieur du segment étendu (712) et un segment conique (62) reliant le segment de sortie (61) au premier canal (30), la face de paroi intérieure (621) du segment conique (62) présentant la même pente de conicité que la face conique (713); et
lorsque la première tige de vanne (71) est dans la première position fermée, la face conique (713) est en contact étroit avec la face de paroi intérieure (621) du segment conique (62), pour bloquer le segment conique (62), alors que lorsque la première tige de vanne (71) est dans la première position ouverte, la face conique (713) est séparée de la face de paroi intérieure (621) du segment conique (62).

5. Vanne selon la revendication 4, dans laquelle le premier canal (30) et le canal de sortie (60) passent à travers le siège en communication coaxiale l'un avec l'autre.

6. Vanne selon la revendication 1, dans laquelle le second canal (40) présente un segment de corps principal (41) et un segment de connexion (42) reliant le segment de corps principal (41) au premier canal (30), le segment de connexion (42) présentant un diamètre intérieur plus petit que le diamètre intérieur du segment de corps principal (41) de manière à former une ouverture en communication avec le segment de corps principal (41).

7. Vanne selon la revendication 6, dans laquelle le canal d'entrée (50) est relié au segment de corps principal (41) à une position adjacente au segment de connexion (42).

8. Vanne selon la revendication 7, dans laquelle la seconde pièce de vanne (80) présente une seconde tige de vanne (81) disposée de manière coulissante dans le segment de corps principal (41) qui peut être déplacée axialement en va-et-vient le long de son axe de tige entre la seconde position fermée et la seconde position ouverte.

9. Vanne selon la revendication 8, dans laquelle:
la seconde tige de vanne (81) est segmentée en séquence le long de son axe de tige en un segment de corps d'arbre (811) positionné dans le segment de corps principal (41) et un segment à extrémité en cône (812) en une forme conique, l'extrémité du segment à extrémité en cône (812) pouvant être étendue dans le segment de connexion (42);
lorsque la seconde tige de vanne (81) est dans la seconde position fermée, l'extrémité du segment à extrémité en cône (812) est positionnée dans le segment de connexion (42), tandis que le biseau conique au niveau du côté circonférentiel du segment à extrémité en cône (812) est pressé contre l'ouverture dans le segment de connexion (42), de manière à bloquer la communication entre le segment de connexion (42) et le segment de corps principal (41); et
lorsque la seconde tige de vanne (81) est dans la seconde position ouverte, le biseau conique au niveau du côté circonférentiel du segment à extrémité en cône (812) est séparé de l'ouverture dans le segment de connexion (42), de manière à mettre le segment de corps principal (41) et le segment de connexion en communication l'un avec l'autre.

10. Vanne selon la revendication 9, dans laquelle, lorsque la seconde tige de vanne (81) est dans la seconde position fermée, l'espace entre la face de paroi latérale intérieure (621) du segment de corps principal (41) et le biseau conique au niveau du côté circonférentiel du segment à extrémité en cône (812) est en communication avec le canal d'entrée (50).

11. Vanne selon la revendication 1, dans laquelle le premier canal (30) et le second canal (40) sont en communication l'un avec l'autre et perpendiculaires l'un à l'autre.

12. Vanne selon la revendication 1, dans laquelle le premier canal (30) et le second canal (40) sont en communication l'un avec l'autre et séparés par un angle inclus aigu.
